# EUROPEAN PATENT APPLICATION

(11) **EP 4 572 273 A1**
(43) Date of publication of application: **18.06.2025**
(21) Application number: 23852931.7
(22) Date of filing: 08.08.2023
(51) Int. Cl.: H04L 27/26, H04J 11/00, H04L 5/00, H04W 52/02

(54) **METHOD, USER EQUIPMENT, PROCESSING DEVICE, AND STORAGE MEDIUM FOR RECEIVING DOWNLINK SIGNAL, AND METHOD AND BASE STATION FOR TRANSMITTING DOWNLINK SIGNAL**

(30) Priority: 11.08.2022 KR 20220100272
(71) Applicant: LG Electronics Inc., Yeongdeungpo-gu Seoul 07336 (KR)
(72) Inventor: MYUNG, Sechang, Seoul 06772 (KR); KIM, Kijun, Seoul 06772 (KR); KIM, Seonwook, Seoul 06772 (KR); KIM, Jaehyung, Seoul 06772 (KR); YANG, Suckchel, Seoul 06772 (KR)
(74) Representative: Plasseraud IP
(86) International application number: PCT/KR2023/011646
(87) International publication number: WO 2024/035055

(57) **Abstract**

A first-type synchronization signal block (SSB) is transmitted on a cell at a first-type SSB time in a first mode. A second-type SSB is transmitted on the cell at a second-type SSB time on the basis of switching from the first mode to a second mode. The first type SSB includes a PSS, an SSS, and a PCBCH, and the second-type SSB has a different structure from the first-type SSB.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

As the number of services/user equipments (UEs) that a network needs to support increases rapidly, the needs for not only power saving for UEs but also energy saving for the network are gradually increasing.

### DISCLOSURE

### Technical Problem

One object of the present disclosure is to provide methods and procedures for network energy conservation.

Another object of the present disclosure is to provide methods and procedures for transmitting downlink signals to achieve network energy conservation.

The objects to be achieved with the present disclosure are not limited to what has been particularly described hereinabove and other objects not described herein will be more clearly understood by persons skilled in the art from the following detailed description.

### Technical Solution

In an aspect of the present disclosure, provided herein is a method of receiving a downlink signal by a user equipment (UE) in a wireless communication system. The method includes: monitoring a first type synchronization signal block (SSB) for a first mode on a cell; based on detecting the first type SSB, acquiring time and frequency synchronization with the cell from the first type SSB; based on transitioning from the first mode to a second mode, monitoring a second type SSB on the cell; and based on detecting the second type SSB, acquiring time and frequency synchronization with the cell from the second type SSB. The first type SSB includes a primary synchronization signal (PSS) in a first orthogonal frequency division multiplexing (OFDM) symbol, a secondary synchronization signal (SSS) in a third OFDM symbol, and a physical broadcast channel (PBCH) in second to fourth OFDM symbols among four consecutive OFDM symbols for the first type SSB while leaving a portion for the SSS in the third OFDM symbol. The second type SSB has a structure different from the first type SSB.

In another aspect of the present disclosure, provided herein is a UE configured to receive a downlink signal in a wireless communication system. The UE includes: at least one transceiver; at least one processor; and at least one computer memory operably connected to the at least one processor and storing instructions that, when executed, cause the at least one processor to perform operations. The operations include: monitoring a first type SSB for a first mode on a cell; based on detecting the first type SSB, acquiring time and frequency synchronization with the cell from the first type SSB; based on transitioning from the first mode to a second mode, monitoring a second type SSB on the cell; and based on detecting the second type SSB, acquiring time and frequency synchronization with the cell from the second type SSB. The first type SSB includes a PSS in a first OFDM symbol, an SSS in a third OFDM symbol, and a PBCH in second to fourth OFDM symbols among four consecutive OFDM symbols for the first type SSB while leaving a portion for the SSS in the third OFDM symbol. The second type SSB has a structure different from the first type SSB.

In another aspect of the present disclosure, provided herein is a processing device. The processing device includes: at least one processor; and at least one computer memory operably connected to the at least one processor and storing instructions that, when executed, cause the at least one processor to perform operations. The operations include: monitoring a first type SSB for a first mode on a cell; based on detecting the first type SSB, acquiring time and frequency synchronization with the cell from the first type SSB; based on transitioning from the first mode to a second mode, monitoring a second type SSB on the cell; and based on detecting the second type SSB, acquiring time and frequency synchronization with the cell from the second type SSB. The first type SSB includes a PSS in a first OFDM symbol, an SSS in a third OFDM symbol, and a PBCH in second to fourth OFDM symbols among four consecutive OFDM symbols for the first type SSB while leaving a portion for the SSS in the third OFDM symbol. The second type SSB has a structure different from the first type SSB.

In another aspect of the present disclosure, provided herein is a computer-readable storage medium configured to store at least one program code including instructions that, when executed, cause at least one processor to perform operations. The operations include: monitoring a first type SSB for a first mode on a cell; based on detecting the first type SSB, acquiring time and frequency synchronization with the cell from the first type SSB; based on transitioning from the first mode to a second mode, monitoring a second type SSB on the cell; and based on detecting the second type SSB, acquiring time and frequency synchronization with the cell from the second type SSB. The first type SSB includes a PSS in a first OFDM symbol, an SSS in a third OFDM symbol, and a PBCH in second to fourth OFDM symbols among four consecutive OFDM symbols for the first type SSB while leaving a portion for the SSS in the third OFDM symbol. The second type SSB has a structure different from the first type SSB.

In another aspect of the present disclosure, provided herein is a method of transmitting, by a base station (BS), a downlink signal to a UE in a wireless communication system. The method includes: transmitting a first type SSB on a cell; and based on transitioning from a first mode to a second mode, transmitting a second type SSB on the cell. The first type SSB includes a PSS in a first OFDM symbol, an SSS in a third OFDM symbol, and a PBCH in second to fourth OFDM symbols among four consecutive OFDM symbols for the first type SSB while leaving a portion for the SSS in the third OFDM symbol. The second type SSB has a structure different from the first type SSB.

In a further aspect of the present disclosure, provided herein is a BS configured to transmit a downlink signal to a UE in a wireless communication system. The BS includes: at least one transceiver; at least one processor; and at least one computer memory operably connected to the at least one processor and storing instructions that, when executed, cause the at least one processor to perform operations. The operations include: transmitting a first type SSB on a cell; and based on transitioning from a first mode to a second mode, transmitting a second type SSB on the cell. The first type SSB includes a PSS in a first OFDM symbol, an SSS in a third OFDM symbol, and a PBCH in second to fourth OFDM symbols among four consecutive OFDM symbols for the first type SSB while leaving a portion for the SSS in the third OFDM symbol. The second type SSB has a structure different from the first type SSB.

In each aspect of the present disclosure, the second type SSB may include the PSS in a first OFDM symbol, the SSS in a third OFDM symbol, and a tracking reference signal (TRS) in second and fourth OFDM symbols among four consecutive OFDM symbols for the second type SSB.

In each aspect of the present disclosure, the second type SSB may occupy fewer resource blocks than resource blocks occupied by the PSS and SSS of the first type SSB.

In each aspect of the present disclosure, the second type SSB may consist of a cyclic prefix (CP), at least one random access preamble, and a guard period (GP).

In each aspect of the present disclosure, the second type SSB may include: i) the PSS in first and second OFDM symbols, and the SSS in third and fourth OFDM symbols among four consecutive OFDM symbols for the second type SSB; or ii) the PSS in the first and fourth OFDM symbols, and the SSS in the second and third OFDM symbols among the four consecutive OFDM symbols for the second type SSB.

In each aspect of the present disclosure, the second type SSB may apply a subcarrier spacing that is twice a subcarrier spacing for a physical downlink shared channel on the cell to the SSS.

In each aspect of the present disclosure, the second mode may be a network energy saving mode.

The foregoing solutions are merely a part of the examples of the present disclosure and various examples into which the technical features of the present disclosure are incorporated may be derived and understood by persons skilled in the art from the following detailed description.

### Advantageous Effects

According to implementation(s) of the present disclosure, energy saving methods and procedures for a network, base station (BS), and/or user equipment (UE) may be provided.

According to implementation(s) of the present disclosure, methods and procedures for transmitting a downlink signal may be provided to enable energy saving for a network, BS, and/or UE.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates physical channels and a signal transmission/reception procedure using the physical channels in a 3rd generation partnership project based (3GPP-based) communication system as an exemplary wireless communication system;
FIG. 7 illustrates bitmaps used to indicate actually transmitted synchronization signal blocks (SSBs);
FIG. 8 illustrates a system information (SI) acquisition procedure;
FIG. 9 illustrates random access procedures applicable to implementation(s) of the present disclosure;
FIG. 10 illustrates an example of physical downlink shared channel (PDSCH) time domain resource assignment (TDRA) by a physical downlink control channel (PDCCH) and an example of physical uplink shared channel (PUSCH) TDRA by the PDCCH;
FIG. 11 illustrates multiplexing patterns for an SSB and a control resource set (CORESET);
FIG. 12 illustrates a scenario in which macro cells and small cells are carrier aggregated;
FIGS. 13 to 15 illustrate the structures of an energy saving discovery signal (ES-DRS) according to some implementations of the present disclosure;
FIG. 16 illustrates the structure of a synchronization signal/physical broadcast channel (SS/PBCH) block;
FIGS. 17 and 18 illustrate exemplary physical random access channel (PRACH) preamble formats;
FIG. 19 illustrates a flow of downlink (DL) signal reception by a user equipment (UE) according to some implementations of the present disclosure, and
FIG. 20 illustrates a flow of DL signal transmission by a base station (BS) according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

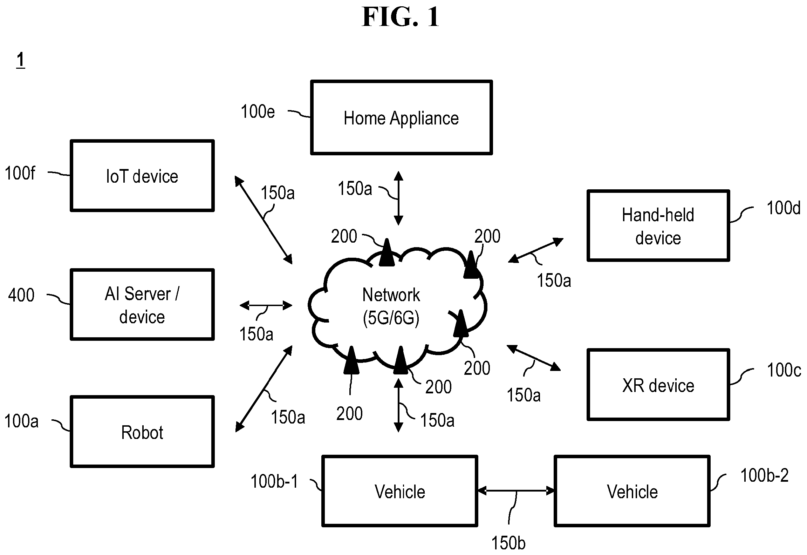

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

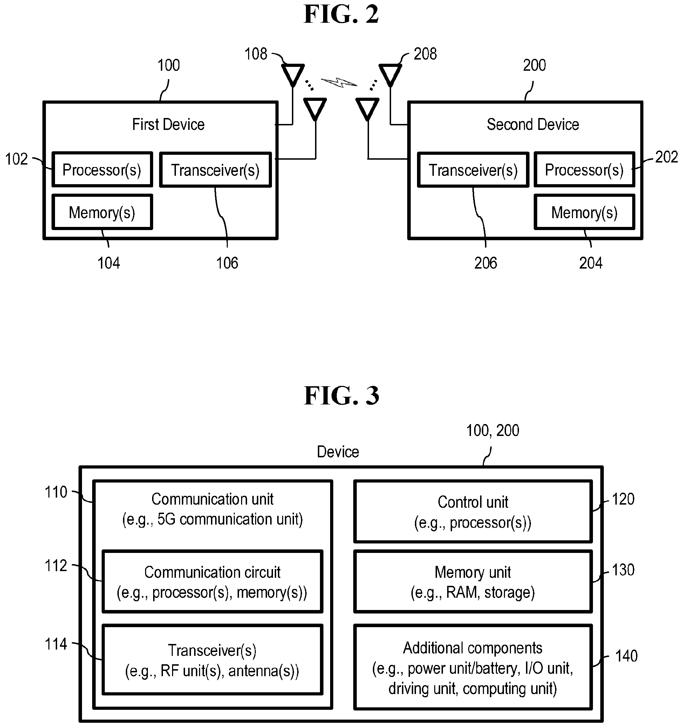

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

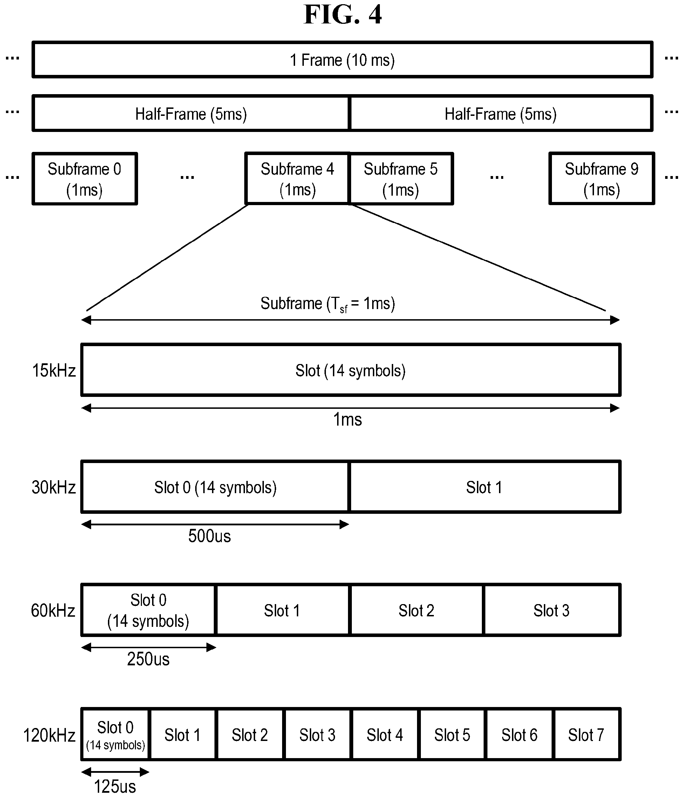

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f}= 4096. For reference, a basic time unit for LTE is Tₛ = 1/(△f_{ref}*N_{f,ref}) where △f_{ref} = 15*10³ Hz and N_{f,ref}= 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| u | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u*}15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

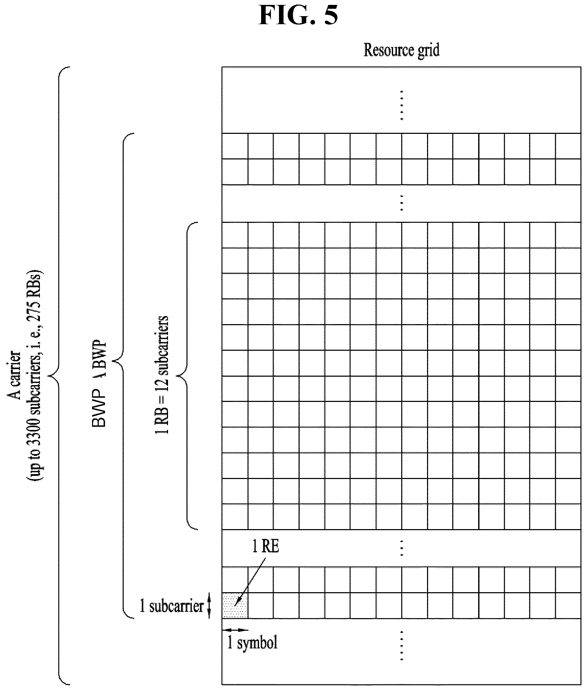

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth N^{size,u}_{grid} for the subcarrier spacing configuration u is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u* is equal to 'Point A' which serves as a common reference point for RB grids. The PRBs for subcarrier spacing configuration u are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Switching between configured BWPs may occur using RRC signaling, DCI, and/or an inactivity timer or during the initiation of random access. If the inactivity timer is configured for the serving cell, the expiration of the inactivity timer associated with the serving cell switches an active BWP to a default BWP configured by the network.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

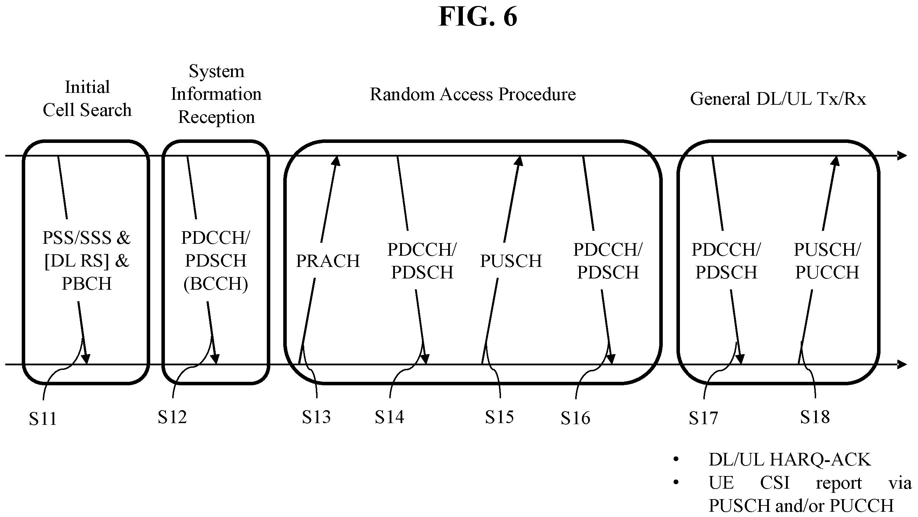

FIG. 6 is a diagram illustrating physical channels and a signal transmission/reception procedure using the physical channels in a 3GPP-based communication system as an exemplary wireless communication system.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

During initial cell selection, the UE assumes that a half-frame including an SSB is repeated at a periodicity of 20 ms. Based on an MIB, the UE may check whether there is a control resource set (CORESET) (e.g., CORESET#0) for a Type0-PDCCH common search space (CSS), such as CORESET#0. If k_{SSB} <= 23 (for FR1) or k_{SSB} <= 11 (for FR2), the UE may determine that there is a CORESET for the Type0-PDCCH CSS. However, if k_{SSB} > 23 (for FR1) or k_{SSB} > 11 (for FR2), the UE may determine that there is no CORESET for the Type0-PDCCH CSS. The Type0-PDCCH CSS is a type of PDCCH search space used to transmit a PDCCH that schedules system information (SI) messages. If the Type0-PDCCH CSS exists, the UE may determine, based on information (e.g., pdcch-ConfigSIB1) in the MIB, (i) a plurality of consecutive RBs and one or more consecutive symbols included in the CORESET (e.g., CORESET#0) and (ii) a PDCCH occasion (i.e., a time-domain position for receiving a PDCCH) (e.g., search space #0). If the Type0-PDCCH CSS does not exist, pdcch-ConfigSIB1 provides information about a frequency location where SSB/SIB1 exists and a frequency ranges where SSB/SIB1 does not exist.

Beam sweeping means that a transmission and reception point (TRP) (e.g., BS/cell) changes the beam (direction) of a radio signal over time. In the present disclosure, the terms "beam" and "beam direction" may be used interchangeably. An SSB may be periodically transmitted by beam sweeping. In this case, an SSB index is implicitly linked to an SSB beam. The SSB beam may be changed on an SSB (index) basis or on an SSB (index) group basis. In the latter case, the SSB beam remains the same within an SSB (index) group. That is, the transmission beam direction of an SSB may be repeated across a plurality of consecutive SSBs. A set of SSBs are transmitted within a 5-ms half-frame. A set of SSBs transmitted within a 5-ms half-frame is called an SSB burst set. The maximum number Lₘₐₓ of SSBs transmitted in the SSB burst set has a value of 4, 8, or 64 depending on the frequency band to which the carrier belongs. For example, the maximum number Lₘₐₓ of SSBs within the SSB burst set may be given as follows.
- For frequency range up to 3 GHz, Lₘₐₓ= 4
- For frequency range from 3GHz to 6 GHz, Lₘₐₓ= 8
- For frequency range from 6 GHz to 52.6 GHz, Lₘₐₓ= 64

The number of actually transmitted SSBs may be configured, which may be smaller than the maximum number Lₘₐₓ.

When multi-beam transmission is not applied, the number of SSB beams is 1.

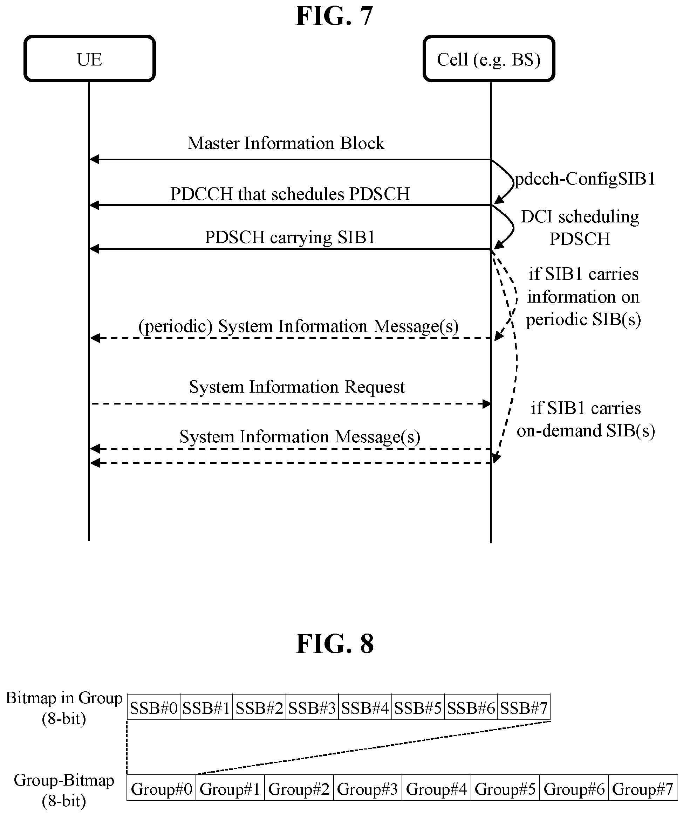

FIG. 7 illustrates bitmaps used to indicate actually transmitted SSBs.

Up to L SSBs may be transmitted within an SSB burst set, and the number/positions of actually transmitted SSBs may vary depending on the BS/cell. The number/positions of actually transmitted SSBs are used for rate-matching and measurement, and information about the actually transmitted SSBs (e.g., ssb-PositionsInBurst) may be indicated as follows.
- In the case related to rate-matching: The information about the actually transmitted SSBs may be indicated through UE-specific RRC signaling or remaining minimum system information (RMSI). The UE-specific RRC signaling includes a full (e.g., length L) bitmap for both frequency ranges below 6 GHz and above 6 GHz. On the other hand, the RMSI (i.e., SIB1) includes a full bitmap for the frequency range below 6GHz and a compressed bitmap for the frequency range above 6GHz as shown. Specifically, the information about the actually transmitted SSBs may be indicated using a group-bitmap (8 bits) and an in-group bitmap (8 bits). In this case, resources (e.g., REs) indicated through the UE-specific RRC signaling or RMSI may be reserved for SSB transmission, and a PDSCH/PUSCH, etc., may be rate-matched considering SSB resources.
- In the case related to measurement: In the RRC_CONNECTED mode, the network (e.g., BS) may indicate a set of SSBs to be measured within a measurement period. The SSB set may be indicated for each frequency layer. If there is no indication regarding the SSB set, a default SSB set is used. The default SSB set includes all SSBs within the measurement period. The SSB set may be indicated using a full (e.g., length L) bitmap of RRC signaling. In the RRC_IDLE mode, the default SSB set is used.

FIG. 8 illustrates a system information (SI) acquisition procedure. The UE may acquire access stratum/non-access stratum (AS/NAS) information from the SI acquisition procedure. The SI acquisition procedure may be applied to UEs in the following states: RRC_IDLE, RRC_INACTIVE, and RRC_CONNECTED. RRC_CONNECTED refers to a state in which the UE has established an RRC connection with the network. RRC_IDLE refers to a state in which the UE is not registered in a specific cell and does not receive AS context and other information from the network. RRC_INACTIVE refers to a state in which the UE remains in a state called CM-CONNECTED where the UE has a signaling connection with the core network for connection management (CM) and is capable of moving within an area defined by the radio access network (RAN) (e.g., BS(s)) without notifying the RAN. CM_CONNECTED refers to a state in which the UE has a NAS signaling connection with the core network. CM_IDLE refers to a state in which the UE has no NAS signaling connection.

In the 3GPP based system, system information (SI) may be classified into a master information block (MIB) and a plurality of system information blocks (SIBs). MIB and a plurality of SIBs are divided into minimum system information (SI) and other SI, where the minimum SI is comprised of MIB and SystemInformationBlock1 (SIB1) and comprises basic information required for initial access and information for acquiring any other SI. SIB1 may be referred to as remaining minimum system information (RMSI). The details may be found in the following.
- The MIB is always transmitted on the BCH with a periodicity of 80 ms and repetitions made within 80 ms. The MIB includes information/parameters related to SIB1 reception and is transmitted through the PBCH in the SSB. During initial cell selection, the UE assumes that a half-frame including SSB(s) is repeated with a periodicity of 20 ms. The UE may determine based on the MIB whether there is a control resource set (CORESET) for a Type0-PDCCH common search space. The Type0-PDCCH common search space is a kind of PDCCH search space and used to transmit a PDCCH that schedules an SI message. When the Type0-PDCCH common search space exists, the UE may determine based on information in the MIB (e.g., pdcch-ConfigSIB1) (i) a plurality of consecutive RBs and one or more consecutive symbols included in a CORESET and (ii) a PDCCH occasion (i.e., a time-domain position for PDCCH reception). When there is no Type0-PDCCH common search space, pdcch-ConfigSIB1 provides information regarding a frequency position where the SSB/SIB1 exists and information regarding a frequency range where the SSB/SIB1 does not exist.
- The SIB1 is transmitted on the downlink shared channel (DL-SCH) with a periodicity of 160 ms and variable transmission repetition periodicity within 160 ms. The default transmission repetition periodicity of SIB1 is 20 ms but the actual transmission repetition periodicity is up to network implementation. SIB1 includes information regarding availability and scheduling (e.g., transmission periodicity and SI-window size) of the remaining SIBs (hereinafter referred to as SIBx, where x is an integer greater than and equal to 2). For example, SIB1 may indicate whether SIBx is periodically broadcast or provided at the request of the UE in an on-demand way. When SIBx is provided in an on-demand way, SIB1 may include information necessary for the UE to perform an SI request. SIB1 is a cell-specific SIB. A PDCCH that schedules SIB1 is transmitted in the Type0-PDCCH common search space, and SIB1 is transmitted through a PDSCH indicated by the PDCCH.
- SIBx is included in the SI message and transmitted through the PDSCH. Each SI message is transmitted within a periodically occurring time window (i.e., SI-window).

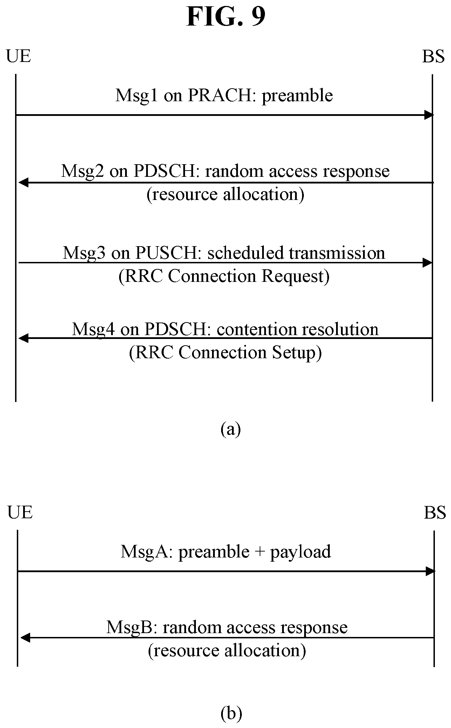

FIG. 9 illustrates random access procedures applicable to implementation(s) of the present disclosure. Particularly, FIG. 9(a) illustrates a 4-step random access procedure, and FIG. 9(b) illustrates a 2-step random access procedure.

A random access procedure may be used for various purposes including initial access, UL synchronization adjustment, resource allocation, handover, radio link reconfiguration after radio link failure, and positioning. Random access procedures are classified into a contention-based procedure and a dedicated (i.e., non-contention-based) procedure. The contention-based random access procedure generally involves initial access, whereas the dedicated random access procedure is used for UL synchronization reconfiguration in the event of handover, DL data arrival at a network, and positioning. In the contention-based random access procedure, the UE randomly selects a random access (RA) preamble. Accordingly, it is possible for a plurality of UEs to simultaneously transmit the same RA preamble, and thus a subsequent contention resolution process is required. In the dedicated random access procedure, the UE uses an RA preamble uniquely allocated to the UE by the BS. Therefore, the UE may perform the random access procedure without collision with other UEs.

Referring to FIG. 9(a), the contention-based random access procedure includes the following four steps. The messages transmitted in steps 1 to 4 may be referred to as message 1 (Msg1) to message 4 (Msg4), respectively.
- Step 1: The UE transmits an RA preamble on a PRACH.
- Step 2: The UE receives an RAR on a PDSCH from the BS.
- Step 3: The UE transmits UL data on a PUSCH to the BS. The UL data includes a Layer 2 (L2)/Layer 3 (L3) message.
- Step 4: The UE receives a contention resolution message on the PDSCH from the BS.

The UE may receive random access information in system information from the BS. For example, information regarding RACH occasions associated with SSBs on a cell may be provided in system information. The UE may select an SSB whose reference signal received power (RSRP), which is measured based on the SSB, exceeds a threshold from among SSBs received on the cell. Then, the UE may transmit an RA preamble on a PRACH associated with the selected SSB. For example, When the UE needs random access, the UE transmits Msg1 (e.g., a preamble) on a PRACH to the BS. The BS may identify each RA preamble by a time/frequency resource (RA occasion (RO)) carrying the RA preamble, and a preamble index (PI). Upon receipt of the RA preamble from the UE, the BS transmits an RAR message to the UE on a PDSCH. To receive the RAR message, the UE monitors an L1/L2 control channel (PDCCH) with a cyclic redundancy check (CRC) masked with a random access-RNTI (RA-RNTI), including scheduling information for the RAR message, within a preconfigured time window (e.g., ra-ResponseWindow). When receiving scheduling information on the PDCCH masked with the RA-RNTI, the UE may receive an RAR message on a PDSCH indicated by the scheduling information. The UE then checks whether there is an RAR directed to the UE in the RAR message. The presence or absence of the RAR directed to the UE may be determined by checking whether there is a random access preamble ID (RAPID) for the preamble transmitted by the UE. The index of the preamble transmitted by the UE may be identical to the RAPID. The RAR includes the index of the corresponding RA preamble, timing offset information (e.g., timing advance command (TAC)) for UL synchronization, UL scheduling information (e.g., UL grant) for Msg3 transmission, and UE temporary identification information (e.g., temporary-C-RNTI (TC-RNTI)). Upon receipt of the RAR, the UE transmits Msg3 on a PUSCH according to the UL scheduling information and the timing offset value in the RAR. Msg3 may include the ID (or global ID) of the UE. Further, Msg3 may include RRC connection request-related information (e.g., RRCSetupRequest message) for initial access to the network. After receiving Msg3, the BS transmits a contention resolution message, that is, Msg4 to the UE. When the UE receives the contention resolution message and succeeds in contention resolution, the TC-RNTI is changed to a C-RNTI. Msg4 may include the ID of the UE/RRC connection-related information (e.g., an RRCSetup message). When information transmitted in Msg3 does not match information received in Msg4 or when the UE has not received Msg4 for a predetermined time, the UE may determine that the contention resolution has failed and retransmit Msg3.

The dedicated random access procedure includes the following three steps. Messages transmitted in step 0 to step 2 may be referred to as Msg0 to Msg2, respectively. The BS may trigger the dedicated random access procedure by a PDCCH serving the purpose of commanding RA preamble transmission (hereinafter, referred to as a PDCCH order).
- Step 0: The BS allocates an RA preamble to the UE by dedicated signaling.
- Step 1: The UE transmits the RA preamble on a PRACH.
- Step 2: The UE receives an RAR on a PDSCH from the BS.

Step 1 and step 2 of the dedicated random access procedure may be the same as step 1 and step 2 of the contention-based random access procedure.

The NR system may require lower latency than the legacy system. Particularly for a latency-sensitive service such as URLLC, the 4-step random access procedure may not be preferable. A low-latency random access procedure may be needed for various scenarios in the NR system. When implementation(s) of the present disclosure are realized along with a random access procedure, the implementation(s) of the present disclosure may be carried out together with the following 2-step random access procedure to reduce latency involved in the random access procedure.

Referring to FIG. 9(b), the 2-step random access procedure may be performed in two steps: transmission of MsgA from the UE to the BS and transmission of MsgB from the BS to the UE. The MsgA transmission may include transmission of an RA preamble on a PRACH and transmission of UL payload on a PUSCH. In the MsgA transmission, the PRACH and the PUSCH may be transmitted in time division multiplexing (TDM). Alternatively, the PRACH and the PUSCH may be transmitted in frequency division multiplexing (FDM) in the MsgA transmission.

Upon receipt of MsgA, the BS may transmit MsgB to the UE. MsgB may include an RAR for the UE.

An RRC connection request-related message (e.g., RRCSetupRequest message) requesting establishment of a connection between the RRC layer of the BS and the RRC layer of the UE may be included in the payload of MsgA. In this case, MsgB may be used to transmit RRC connection-related information (e.g., RRCSetup message). In contrast, the RRC connection request-related message (e.g., RRCSetupRequest message) may be transmitted on a PUSCH based on a UL grant in MsgB. In this case, RRC connection-related information (e.g., RRCSetup message) related to the RRC connection request may be transmitted on a PDSCH associated with the PUSCH transmission after the PUSCH transmission based on MsgB.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

For UL-SCH data transmission, the UE needs to have UL resources available to the UE, and for DL-SCH data reception, the UE needs to have DL resources available to the UE. The UL and DL resources are assigned to the UE through resource allocation by the BS. Resource allocation may include time domain resource allocation (TDRA) and frequency domain resource allocation (FDRA). In the present disclosure, UL resource allocation is also referred to as an UL grant, and DL resource allocation is also referred to as a DL assignment. The UL grant may be dynamically received by the UE on a PDCCH or in an RAR, or the UL grant may be semi-persistently configured to the UE through RRC signaling from the BS. The DL assignment may be dynamically received by the UE on a PDCCH or semi-persistently configured to the UE through RRC signaling from the BS.

On UL, the BS may dynamically allocate UL resources to the UE through PDCCH(s) addressed to a temporary identifier (cell radio network temporary identifier, C-RNTI). The UE monitors the PDCCH(s) to detect possible UL grants for UL transmission. The BS may allocate the UL resources using configured grants for the UE. Two types of configured grants, Type 1 and Type 2, may be used. In the case of Type 1, the BS directly provides a configured UL grant (including a periodicity) via RRC signaling. In the case of Type 2, the BS configures the periodicity of an RRC-configured UL grant via RRC signaling and may signal and activate or deactivate the configured UL grant through a PDCCH addressed to a configured scheduling RNTI (CS-RNTI). For example, in the case of Type 2, the PDCCH addressed to the CS-RNTI indicates that the corresponding UL grant may be implicitly reused according to the periodicity configured via RRC signaling until deactivation.

On DL, the BS may dynamically allocate DL resources to the UE through PDCCH(s) addressed to a C-RNTI. The UE monitors the PDCCH(s) to detect possible DL assignments. The BS may allocate the DL resources to the UE using semi-persistent scheduling (SPS). The BS may configure the periodicity of DL assignments configured via RRC signaling and signal and activate or deactivate the configured DL assignments through a PDCCH addressed to a CS-RNTI. For example, the PDCCH addressed to the CS-RNTI indicates that the corresponding DL assignment may be implicitly reused according to the periodicity configured via RRC signaling until deactivation.

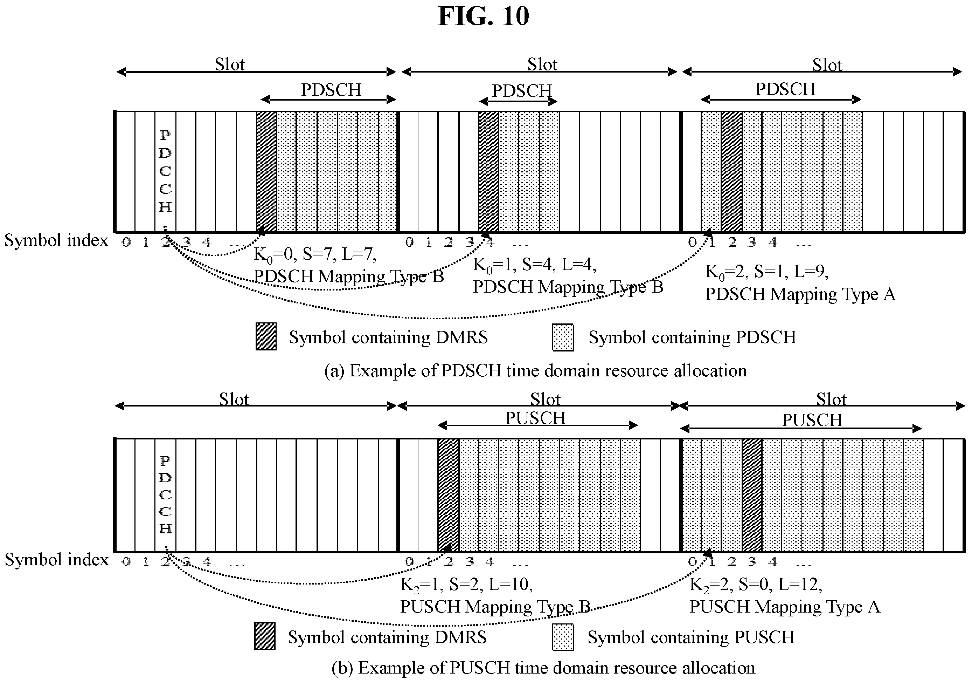

FIG. 10 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index m+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol S relative to the start of the slot with the PDSCH or PUSCH and the number of consecutive symbols, *L,* counting from the symbol S. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

A CORESET, which is a set of time-frequency resources on which the UE is capable of monitoring a PDCCH, may be defined and/or configured. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

One or more CORESETs may be configured for the UE, and a plurality of CORESETs may overlap in the time/frequency domain. To configure a CORESET, the following parameters may be provided by the BS.
- controlResourceSetId: represents information regarding the identification (ID) of the CORESET.
- frequencyDomainResources: represents the frequency-domain resources of the CORESET and is indicated through a bitmap, where each bit corresponds to an RB group (= 6 consecutive RBs). For example, the MSB (Most Significant Bit) of the bitmap corresponds to the first RB group within a BWP. The RB group corresponding to bits with a value of 1 is allocated as the frequency-domain resources of the CORESET.
- duration: represents the time-domain resources of the CORESET, and specifically, indicates the number of consecutive OFDMA symbols included in the CORESET. For example, duration may have a value ranging from 1 to 3.
- cce-REG-MappingType: represents a CCE-to-REG mapping type. Interleaved and non-interleaved types are supported.
- precoderGranularity: represents precoder granularity in the frequency domain.
- tci-StatesPDCCH: represents information regarding a transmission configuration indication (TCI) state for a PDCCH (e.g., TCI-StateID).
- tci-PresentInDCI: represents whether a TCI field is included in DCI.
- pdcch-DMRS-ScramblingID: represents information used for initialization of a PDCCH DMRS scrambling sequence.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

The following table shows PDCCH search spaces.

**Table 4**

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.
- searchSpaceId: indicates the ID of the SS set.
- controlResourceSetId: indicates the CORESET associated with the SS set.
- monitoringSlotPeriodicityAndOffset: indicates a PDCCH monitoring periodicity (in a unit of slot) and a PDCCH monitoring offset (in a unit of slot).
- monitoringSymbolsWithinSlot: indicates first OFDMA symbol(s) for PDCCH monitoring in a slot in which the PDCCH monitoring is configured. The first OFDMA symbol(s) are indicated by a bitmap, and each bit corresponds to a respective one of OFDMA symbols in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: indicates the number of PDCCH candidates (e.g., one of 0, 1, 2, 3, 4, 5, 6, and 8) for each AL (where AL={1, 2, 4, 8, 16}).
- searchSpaceType: indicates whether the SS type is the CSS or USS.
- DCI format: indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

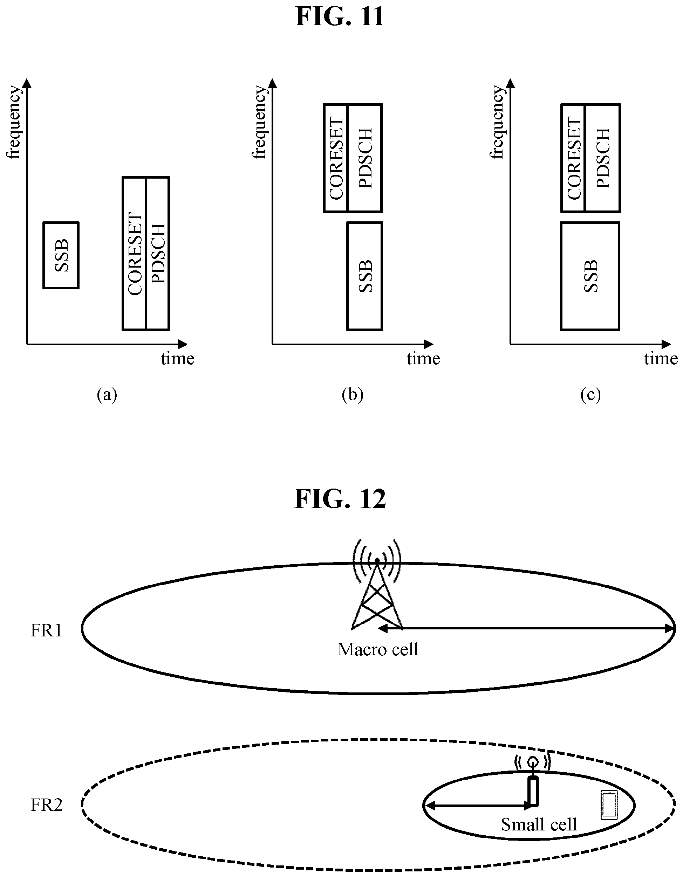

FIG. 11 illustrates SSB and CORESET multiplexing patterns. Specifically, FIG. 11(a) shows SSB and CORESET multiplexing pattern 1, FIG. 11(b) shows SSB and CORESET multiplexing pattern 2, and FIG. 11(c) shows SSB and CORESET multiplexing pattern 3. The SSB and CORSET multiplexing pattern may be predefined depending on the frequency range (FR) to which a corresponding cell belongs or the subcarrier spacing of an SSB or PDCCH.

As illustrated in FIG. 11, an SSB and CORESET may be multiplexed in the time domain, in the time and frequency domains, or in the frequency domain.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

According to the current 5G specifications, SIB1, which is a part of the minimum system information required for cell access, is transmitted on a DL-SCH with a periodicity of 160 ms or a variable transmission repetition periodicity within 160 ms. The default transmission repetition periodicity of SIB1 is 20 ms, but the actual transmission repetition periodicity depends on the network implementation. For SSB and CORESET multiplexing pattern 1, the transmission repetition period of SIB1 is 20 ms. For SSB and CORESET multiplexing patterns 2/3, the transmission repetition period of SIB1 is the same as the SSBI period. A PDCCH monitoring occasion on which the UE attempts to decode the SIB1 PDCCH may be determined based on information in the MIB, for example, pdcch-ConfigSIB1. For example, during cell search, if the UE determines based on the MIB that a Type0-PDCCH CSS set exists, the UE may determine the number of consecutive RBs and the number of consecutive symbols for the CORESET of the Type0-PDCCH CSS set from controlResourceSetZero in pdcch-ConfigSIB1. The UE may also determine PDCCH monitoring occasions from searchSpaceZero in pdcch-ConfigSIB1. For example, for an SSB with index i, the system frame number (SFN) of a frame of the related CORESET, SFN_{C}; a first slot including Type-0 monitoring occasion(s) in the frame corresponding to SFN_{C}, slot n₀; and a combination of parameter values required to determine the index of the first symbol of the corresponding CORESET in slot n₀ may be provided by searchSpaceZero. The UE may monitor the Type0-PDCCH CSS set in the PDCCH monitoring occasion to detect the SIB1 PDCCH. The UE may determine frequency resource allocation and time resource allocation of the SIB1 PDSCH from DCI carried by the SIB1 PDCCH. The UE may receive/decode SIB1 based on the frequency resource allocation and time resource allocation.

Due to battery capacities, power saving for the UE has been one of the key concerns in the communication field, and various techniques have been developed for the UE power saving. For example, in the RRC_CONNECTED state, the PDCCH monitoring operation of the UE is managed by discontinuous reception (DRX), bandwidth adaptation (BA), and DCI with a CRC scrambled by a power saving RNTI (PS-RNTI) (hereinafter referred to as DCP), where the PS-RNTI is used to determine whether the UE needs to monitor a PDCCH during the next occurrence of a CONNECTED mode DRX ON duration. As another example, the UE power saving in the RRC_IDLE/RRC_INACTIVE state may be achieved by providing the configuration for a tracking reference signal (TRS) as a CSI-RS for tracking at TRS occasions. The TRS is a set of RSs intended to assist the UE in time and frequency tracking, and during the TRS occasions, the TRS may allow the UE in the RRC_IDLE/RRC_INACTIVE state to sleep for a longer duration before waking up for paging occasions.

Typically, under the assumption that the BS has no power constraints, energy saving for the BS has not been a major concern in the communication field compared to energy saving for the UE. However, the energy saving of the BS is significantly considered in wireless communication systems, including 3GPP, due to its potential contribution to building eco-friendly networks through reduction of carbon emissions and curtailing operational expenditures (OPEX) for communication operators. In particular, as the demand for high transmission rates has escalated with the advent of 5G communications, BSs have been required to be equipped with a greater number of antennas and provide services in broader bandwidths and frequency bands. According to recent study, the energy cost of the BS has reached up to 20% of the total OPEX. Due to the increased interest in the energy saving of the BS, 3GPP NR release 18 has approved a new study item called "study on network energy savings." For example, to enhance energy-saving capabilities in terms of the transmission and reception of the BS, this study investigates how to achieve more efficient operations for transmission and/or reception in the time, frequency, space, and power domains dynamically and/or semi-statically with finer granularity of adaptation based on one or more network energy-saving techniques, using potential support/feedback from the UE and potential UE support information.

The BS may switch to the sleep mode and perform symbol muting (i.e., energy saving through discontinuous transmission (DTX)) during time periods where there is no data to transmit/receive or in light-load situations. However, a common (or cell-common) signal such as an SSB, which is essential for the synchronization, initial access, and measurement of the UE, always needs to be transmitted as an always-on signal and may not be symbol-muted. To transmit the signal, the BS should periodically switch from the sleep mode to the active mode. Therefore, from the perspective of energy saving for the BS, significant gains from transitioning to the sleep mode are difficult to achieve.

In NR, an SSB/SIB may be transmitted on a plurality of beams based on a specific subcarrier spacing (SCS) and beam sweeping for each frequency range (FR). As the FR increases, the number of beams increases. As a result, the amount of time resources used for transmitting common signals/channels such as SSB/SIB1 in FR2 becomes relatively greater compared to FR1, which may lead to a higher proportion of energy consumption for the BS.

FIG. 12 illustrates a scenario where macro cells and small cells are carrier aggregated.

Referring to FIG. 12, in a CA environment between a macro P(S)Cell and a small SCell (e.g., a combination of a PCell for an SCS of 15 kHz and an SCell for an SCS of 120 kHz), if the difference between the distance between the UE and the macro cell and the distance between the UE and the small cell exceeds approximately 175 meters, the propagation delay may become larger than the CP length (586 ns) of the 120 kHz SCS. In such a CA scenario, frame boundary misalignment exceeding the CP length may occur between the PCell and SCell, and there is a need to develop signals for compensation of misalignment.

Table 5 is an excerpt from the standard document 3GPP 38.133. According to Table 5 below, even in intra/inter-band CA within the same FR, timing misalignment larger than the CP may occur. In particular, for non-contiguous intra-band CA, in FR1, the maximum receive timing difference (MRTD) is 3 µs, but with an SCS of30/60 kHz, the timing misalignment may become larger than the CP length.

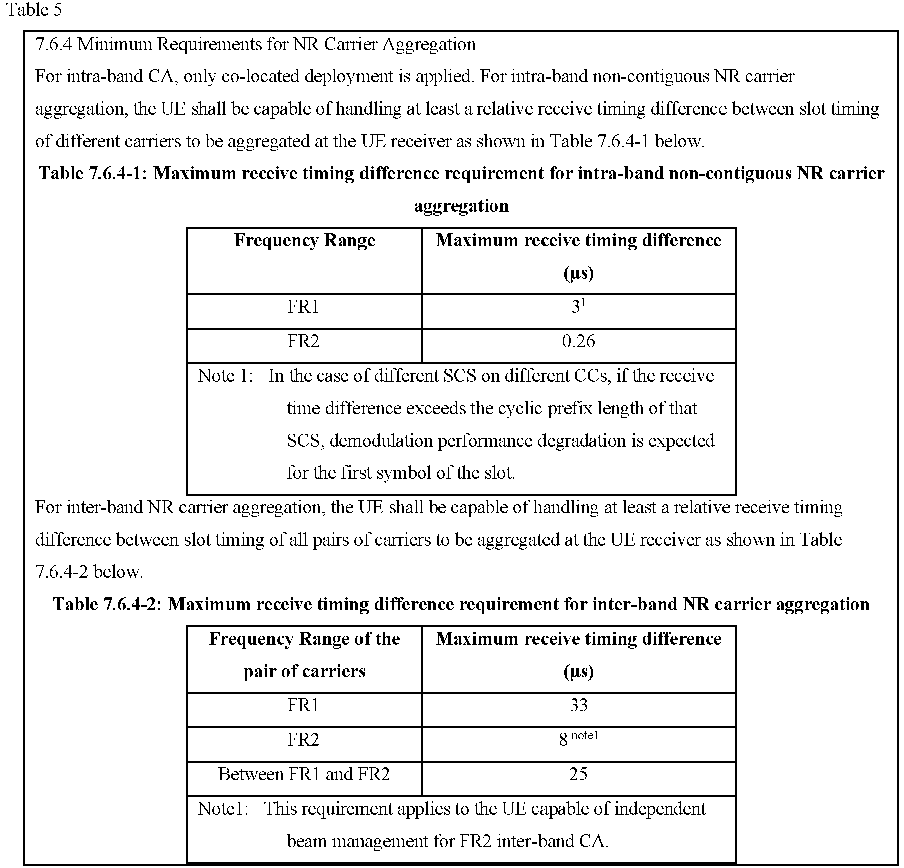

To address such situations in the prior art, the UE needs to receive an SSB and/or TRS on the SCell for acquisition of fine time/frequency synchronization on the SCell. When the UE first connects to the BS, the UE performs a step-wise time/frequency synchronization process using a PSS, SSS, and TRS in the order of PSS -> SSS -> TRS (for fine synchronization). Hereinafter, implementations of the present disclosure regarding methods for saving energy consumed by the BS when the BS transmits signals required for the UE to synchronize with the serving cell. According to the implementations of the present disclosure, the step-wise process for the PSS/SSS/TRS may be reduced, or the signals required for the UE to acquire time/frequency synchronization may be reconfigured as compactly as possible in the time domain. For convenience, a set of signals transmitted by the BS for serving cell synchronization may be referred to as an energy saving discovery signal (ES-DRS).

In some implementations of this specification, when the BS operates in a network energy saving (NES) mode for energy saving (ES), it means that the BS preconfigures a plurality of OFF periods (i.e., BS DTX periods) during which transmission of a specific DL signal is turned off for a specific period. The BS dynamically indicates one of the OFF periods to indicate that the DL signal will not be transmitted during the predefined time period, thereby enabling power consumption saving for both the BS and UE. The NES mode may also be applied not only to the time domain but also to the following operations in the frequency domain: BWP switching, dynamic RB adaptation, etc. For the spatial domain, the NES mode may refer to an operation mode in which when the BS semi-statically or dynamically disables a specific receiving antenna port, the BS refrains from performing transmission and/or reception on the corresponding antenna port to achieve power consumption reduction for both the BS and UE.

### <Method #1> A method of configuring an ES-DRS with a combination of DL/UL signals by modifying the existing SSB structure

> (1-1) A method of maintaining a PSS/SSS and replacing a PBCH symbol with a TRS (i.e., configuring the ES-DRS with PSS + TRS + SSS + TRS)
   >> A. In this case, the PSS/SSS may be composed of 11 PRBs by reducing the number of guard tones compared to the existing PSS/SSS (which uses a length-127 sequence).
> (1-2) A method of reconfiguring the ES-DRS in the form of CP + sequence + sequence + ... similar to a RACH
   >> A. A method of configuring the ES-DRS as CP+SSS+SSS+GP, CP+TRS+TRS+GP, or CP+RACH+RACH+GP, where the GP is a guard period with no signal, and the RACH is a (RACH) preamble
   >> B. A method of configuring a different number of repetitions of sequences depending on the situation (for example, the radius of the cell or the speed of the UE)
   >> C. In this case, the SSS may be composed of 11 PRBs by reducing the number of guard tones compared to the existing SSS (which uses a length-127 sequence).
> (1-3) A method of configuring the ES-DRS through a combination of PSS/SSS
> A. A method of configuring the ES-DRS in the form of PSS+PSS+SSS+SSS or PSS+SSS+SSS+PSS
> (1-4) A method of expanding an SSS-SCS to 30 kHz while a data-SCS is 15 kHz in order to reduce a time region occupied by 2 symbols and configuring the 2-symbol region of the SSS to correspond to the 1-symbol region of the data (i.e., configuring the time domain length of the 2 symbols of the SSB to be the same as the time domain length of the 1-symbol region of the data) when the SSS is repeated and transmitted (two or more times)
> (1-5) A method of multiplexing the TRS with the ES-DRS every time the SSB is transmitted K times (e.g., including the TRS in the ES-DRS structure every time the SSB is transmitted K times).

However, Method #1 may be applied when the UE is implemented with a single oscillator in supporting CA between the PCell and SCell and thus, it is allowed to assume that the time/frequency error is below a certain level compared to the PCell.

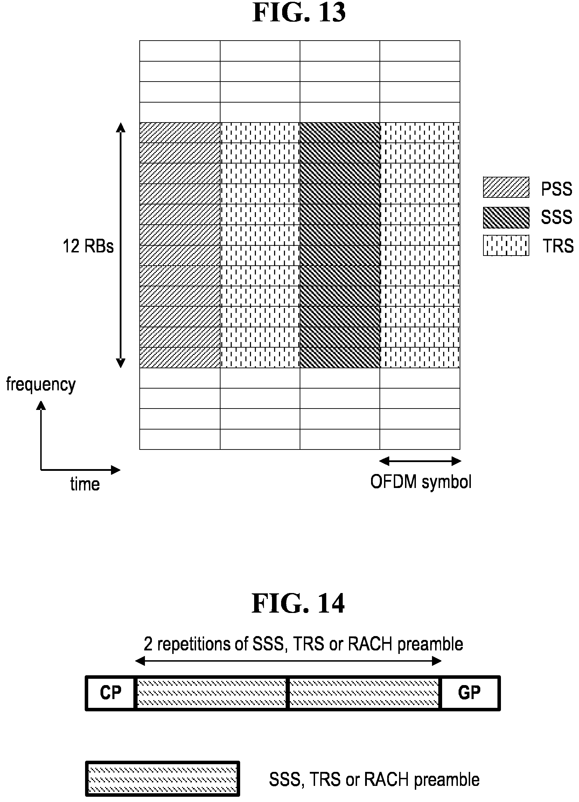

The methods from (1-1) to (1-5) are explained in more detail below. FIGS. 13 to 15 illustrate the structures of an ES-DRS according to some implementations of the present disclosure.

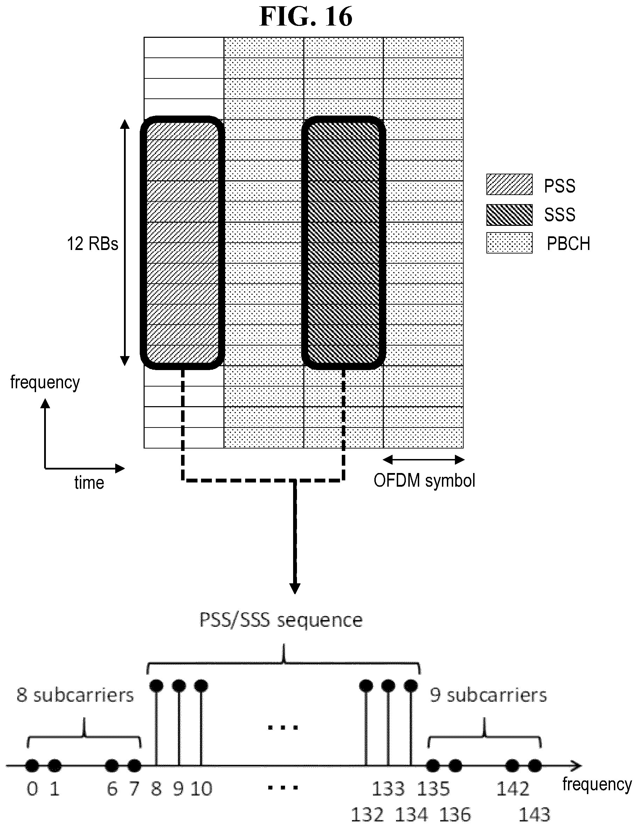

FIG. 16 illustrates the structure of an SS/PBCH block. The currently used SS/PBCH block (i.e., SSB) is positioned in the time domain in the order of PSS + PBCH + SSS + PBCH. The PSS and SSS are a length-127 M-sequence and Gold sequence, spanning over 12 RBs, and the PBCH is configured over 20 RBs, wrapping around the SSS. Referring to FIG. 16, the SSB includes the PSS, SSS, and PBCH. The PSS and SSS each occupy 1 OFDM symbol and 127 subcarriers, and the PBCH spans across 3 OFDM symbols and 240 subcarriers except for 1 OFDM symbol, which is left as an unused portion in the middle for the SSS. When the UE first receives the SSB and performs the initial access procedure, the UE finds a synchronization raster where the SSB is transmitted based on an SSB frequency position SS_{REF} corresponding to the global synchronization channel number (GSCN) depending on the frequency range in which the UE operates, and then acquires system information. The UE obtains a symbol timing and a cell ID within a cell group from the PSS, and detects the cell group based on the SSS. Next, the UE may determine an SSB index and a half frame (HF) index based on a DM-RS included in the PBCH (i.e., the UE may detect slot and frame boundaries). By decoding the PBCH, the UE obtains time information (80 ms (PBCH TTI), SFN, SSB index, HF, etc.) and an RMSI CORESET/search space configuration from the MIB. In this way, the UE performs cell access and time/frequency synchronization through the PSS, SSS, and PBCH.

As shown in FIG. 16, the PSS and SSS, which are composed of length-127 sequences, use 127 REs within 12 RBs for PSS and SSS mapping. Among the 127 REs, 17 subcarriers are reserved as guard subcarriers.

As previously explained, in a CA environment between a macro P(S)Cell and a small SCell, if the difference between the distance between the UE and the macro cell and the distance between the UE and the small cell is above approximately 175 meters, the propagation delay may become larger than the CP length (586 ns) of the 120 kHz SCS. Therefore, a signal may be needed to compensate for frame boundary misalignment exceeding the CP length between the PCell and SCell. Therefore, to achieve fine time/frequency synchronization for the SCell, the UE may use the ES-DRS, which is configured (as compactly as possible) with a combination of DL/UL signals by modifying the existing SSB structure, for time/frequency synchronization acquisition, instead of receiving the existing SSB and/or TRS on the SCell.

As a first method of configuring the ES-DRS, it may be considered to maintain the current structure of the PSS/SSS and replace the PBCH symbol with the TRS. In other words, instead of the current time-domain signal configuration of the SSB, which is PSS + PBCH + SSS + PBCH, the ES-DRS may be configured as PSS + TRS + SSS + TRS, as illustrated in FIG. 13. Although not shown, the PSS/SSS may be composed of 11 PRBs by reducing the number of guard tones compared to the existing PSS/SSS (which uses a length-127 sequence). Additionally, considering the frequency synchronization resolution of the ES-DRS, it is also possible to configure the ES-DRS in a structure that maintains a 4-symbol TRS interval, such as {beam1 PSS + beam1 TRS + beam1 SSS + beam2 TRS} + {beam2 PSS + beam1 TRS + beam2 SSS + beam2 TRS}, .... In this case, beam indices such as beam1, beam2, etc. may be replaced by SSB indices. Alternatively, beam1 and beam2 may be different beams with different SSB indices, or beam1 and beam2 may have the same beam index (for example, beams that are in a QCL relationship).

As another method, it may be considered to reconfigure the ES-DRS in the form of CP + sequence + sequence + ..., similar to the current RACH.

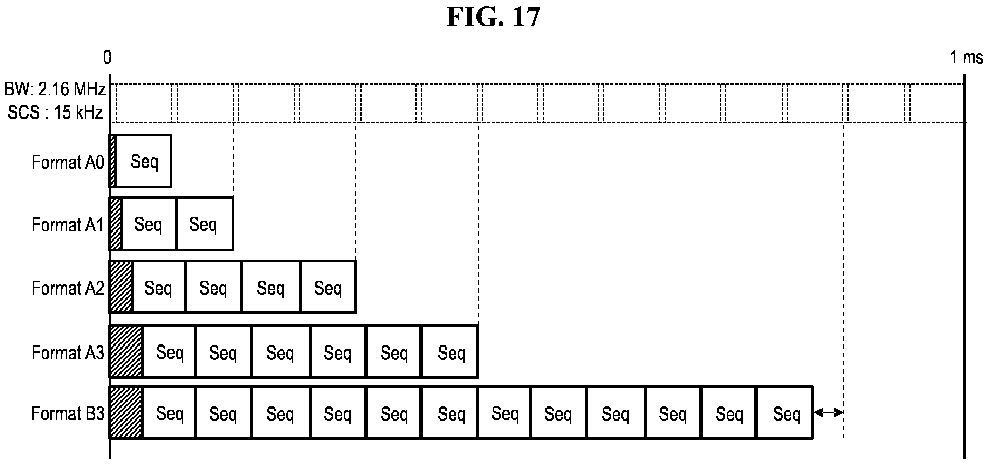

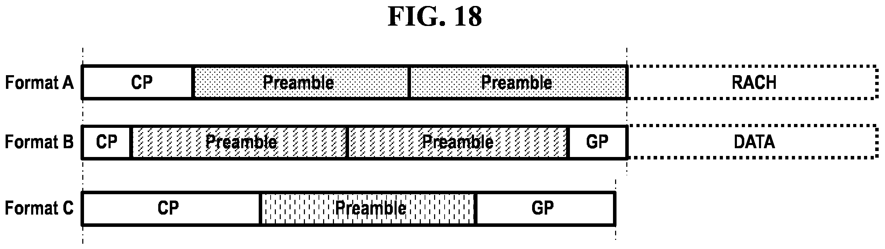

FIGS. 17 and 18 illustrate exemplary PRACH preamble formats.

The current PRACH preamble uses long and short sequences. A PRACH preamble using a short sequence of length-139 is configured in the form of CP + sequence or CP + sequence + sequence + ..., as illustrated in FIGS. 17 and 18.

According to the PRACH preamble formats, as illustrated in FIGS. 17 and 18, Format A is configured in the form of CP + sequence + sequence, and Format B is configured in the form of CP + sequence + sequence + GP, and Format C is configured in the form of CP + sequence + GP. These various PRACH preamble formats are designed considering factors such as the size of the cell or high-speed scenarios where the UE is moving quickly. The PRACH preamble formats may be selected and used according to the environment of the UE and cell.

Thus, similar to the PRACH preamble format, as illustrated in FIG. 14, a method of configuring the ES-DRS in the form of CP + SSS + SSS + GP, CP + TRS + TRS + GP, or CP + RACH + RACH + GP may be considered. Depending on the size of the cell or the speed of the UE, the number of repetitions of sequences in the above structure may be configured differently for transmission. Additionally, although not shown, the SSS may be composed of 11 PRBs by reducing the number of guard tones compared to the existing structure.

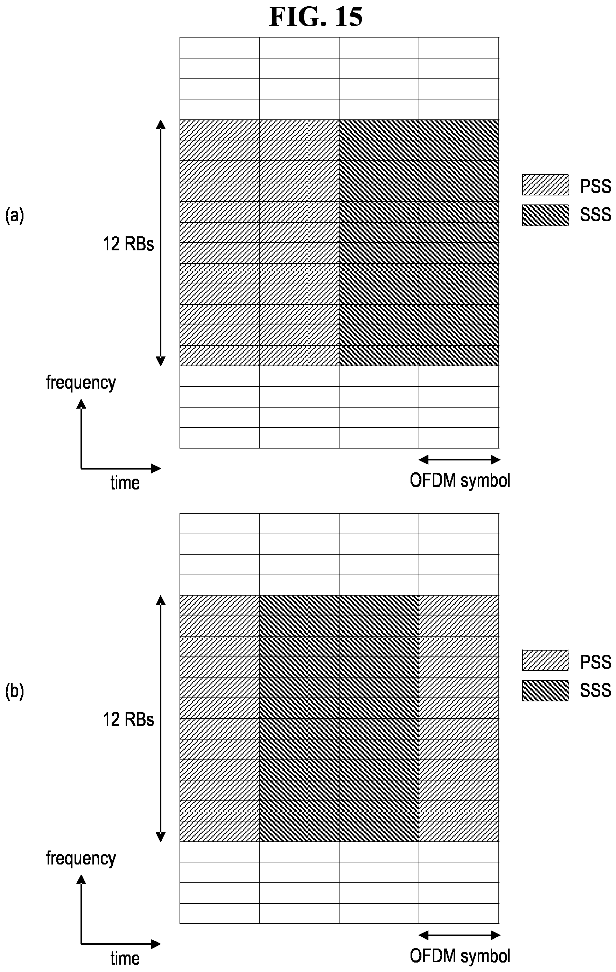

Next, a method of configuring the ES-DRS based on a PSS/SSS combination may also be considered. For example, an additional PSS/SSS may be placed at the position of the PBCH in the current SSB structure. If the method in (1-1) is in the form of {PSS + TRS + SSS + TRS}, as illustrated in FIG. 15, the ES-DRS may be configured in the form of {PSS + PSS + SSS + SSS} or {PSS + SSS + SSS + PSS}, and there may be differences therebetween in terms of frequency synchronization. For example, in the case of {PSS + SSS + SSS + PSS}, there is a distance of 1-OFDM symbol (e.g., the distance between the PSS and SSS) and 3-OFDM symbols (e.g., the distance between the PSS and PSS), and thus the frequency synchronization may be achieved by first acquiring with the 1-OFDM symbol distance and then reducing residual errors with the 3-OFDM symbol distance. Considering this structure, the BS may additionally transmit either {PSS + PSS + SSS + SSS} or {PSS + PSS + SSS + (-)SSS} to allow the UE to perform blind detection, thereby enabling simple signaling (e.g., signaling the ON/OFF status of the NES mode). Here, (-)SSS refers to an SSS that is mapped in the opposite direction. Similarly, when using the {PSS + SSS + SSS + PSS} structure, the BS may transmit either {PSS + SSS + SSS + PSS} or {PSS + SSS + (-)SSS + PSS} to allow the UE to perform blind detection, thereby enabling simple signaling (e.g., signaling the ON/OFF status of the NES mode).

On the other hand, when a new ES-DRS structure is used based on the PSS/SSS combination, it may lead to the possibility of legacy UEs malfunctioning due to the newly added PSS/SSS. Accordingly, a structure of keeping only one PSS and adding an additional SSS may also be considered as an alternative method. For example, a method of configuring the ES-DRS as {PSS + SSS + SSS + SSS} may be considered, and this structure may also provide similar performance in terms of frequency synchronization as the method in (1-1). In this case, the BS may transmit either {PSS + SSS + SSS + SSS} or {PSS + SSS + SSS + (-)SSS} to allow the UE to perform blind detection, thereby enabling simple signaling (e.g., signaling the ON/OFF status of the NES mode).

In the methods described above, when the SSS is repeated and transmitted, an SSS-SCS may be increased to 30 kHz while a data-SCS is 15 kHz in order to reduce a time region occupied by 2 symbols. This may configure the 2-symbol region of the SSS to correspond to the 1-symbol region of the data (i.e., the time domain length of the 2 symbols of the SSB becomes the same as the time domain length of the 1-symbol region of the data). Additionally, the need for the TRS may vary depending on the UE, and even for UEs that require the TRS, the TRS may not necessarily need to be transmitted as frequently as the SSB periodicity. Therefore, a TRS-less ES-DRS may be possible as described in the methods in (1-2) or (1-3), or a structure where the TRS is multiplexed with the ES-DRS and transmitted every time the SSB is transmitted K times (especially in the case of the method in (1-1)) may also be considered. Alternatively, the periodicity of the TRS included in the ES-DRS may be configured/transmitted with a periodicity shorter than that of the SSB.

### <Method #2> A method of signaling an ES-DRS burst structure and a method of determining the power of signals constituting an ES-DRS

> (2-1) A method of signaling a time-domain ES-DRS burst structure through SSB indices transmitted in the form of a bitmap when an SSB symbol duration is similar to the existing SSB symbol duration as in (1-1) or (1-3) of Method #1, similar to informing an actually transmitted SSB index using bitmaps (refer to FIG. 8)
   >> A. A method of configuring the bandwidth (BW) of a TRS to be the same as the BW of an SCell BWP or configuring the BW of the TRP additionally by signaling only the number of bursts if a continuous ES-DRS burst structure is advantageous in terms of NES
> (2-2) If a new structure is introduced as in (1-2) of Method #1, the signaling method may depend on the number of symbols in the ES-DRS.
   >> A. For a 2-symbol ES-DRS, an ES-DRS burst structure where 7 consecutive symbols or the last few symbols within one slot are left for UL and 6 consecutive symbols are placed within the slot may be signaled.
> (2-3) For a 4-symbol DRS as in (1-1) and (1-3) of Method #1
   >> A. An ES-DRS burst structure where 3 consecutive DRSs are placed continuously within a single slot (with a gap of 2 symbols) (e.g., 4-symbol DRS + 2-symbol gap + 4-symbol DRS + 2-symbol gap + 4-symbol DRS or 4-symbol DRS + 4-symbol DRS + 4-symbol DRS + 2-symbol gap + 2-symbol gap) may be signaled.

### (2-4) A method of determining the power of signals constituting the ES-DRS

A. A method where a TRS, which replaces a PBCH, is assumed to have the same power as an SSS
B. A method of assuming the same power as an PSS (because there is no PBCH part)
C. A method of determining a power value through a separate configuration.

### (2-5) A method of signaling ES-DRS configuration information for a neighboring cell when the ES-DRS is used for neighboring cell measurement

The methods in (2-1) to (2-5) are explained in more detail below.

When the ES-DRS is configured as in (1-1) or (1-3) of Method #1, in the existing SSB structure of {PSS + PBCH + SSS + PBCH}, the positions of PSS and SSS symbols may remain the same, and the TRS, PSS, and/or SSS may be placed at the position of the PBCH. If an SSB symbol duration is similar to the existing SSB symbol duration, signaling a time-domain ES-DRS burst structure may be sufficiently achieved by simply indicating a transmitted SSB index in the form of a bitmap (i.e., in the form of *ssb-PositionsInBurst* within SIB1 or *ServingCellConfigCommon*)*,* similar to informing an actually transmitted SSB index. Alternatively, when a continuous ES-DRS burst structure is advantageous in terms of NES, a method of signaling only the number of bursts may also be feasible (if a structure in which the ES-DRSs are arranged within a slot is known). In this case, the BW of the TRS may be set to be the same as the BW of an SCell BWP, or the BW of the TRS may be configured additionally.

On the other hand, if a new structure different from the existing SSB is introduced as in (1-2) of Method #1, various ES-DRS burst structures may be possible depending on the number of symbols in the ES-DRS. For example, in the case of a 2-symbol ES-DRS, an ES-DRS burst may be configured by leaving 7 consecutive symbols or the last few symbols within one slot for UL and placing 6 consecutive symbols within the slot. Alternatively, in the case of a 4-symbol DRS as in (1-1) and (1-3) of Method #1, the ES-DRS may be configured by placing 3 consecutive DRSs continuously within a single slot (with a gap of 2 symbols) (e.g., 4-symbol DRS + 2-symbol gap + 4-symbol DRS + 2-symbol gap + 4-symbol DRS or 4-symbol DRS + 4-symbol DRS + 4-symbol DRS + 2-symbol gap + 2-symbol gap)

Next, for the PSS and SSS included in the SSB, the UE may assume a PSS energy per resource element (EPRE) to SSS EPRE ratio of 0 dB or 3 dB. That is, the PSS may be power-boosted by 0 or 3 dB compared to the SSS, or the same power may be assumed for the SSB and PBCH. Similarly, for the power of signals included in the ES-DRS, three options may be considered: i) a method where the TRS, replacing the PBCH, is assumed to have the same power as the SSS; ii) a method where the power is assumed to be the same as the PSS (since there is no PBCH part); or iii) a method where the power value is determined through a separate configuration. Furthermore, if the ES-DRS is used for neighboring cell measurement, the ES-DRS configuration information for a neighboring cell (e.g., the structure of the ES-DRS, the burst configuration, and the power of the signals included in the ES-DRS) may also be signaled by the BS.

According to some implementations of the present disclosure, since no PBCH is included in the ES-DRS, PBCH encoding is not performed by the BS, which allows for energy saving benefits. In addition, according to some implementations of the present disclosure, since the PBCH, which occupies more RBs than the SSS and PSS, does not need to be transmitted, the transmission of the ES-DRS may consume less power compared to the transmission of the SSB.

According to some implementations of the present disclosure, the energy consumed by the BS when transmitting the ES-DRS required for serving cell synchronization may be saved.

Even when the BS operates in the NES mode, if the ES-DRS required for the UE to maintain or acquire time/frequency synchronization with a cell needs to be provided at SSB occasions of the corresponding cell, the BS may need to transmit the ES-DRS at significant SSB occasions in a specific frequency range (e.g., FR2). Therefore, according to some implementations of the present disclosure, the ES-DRS may be transmitted to UEs in the cell at each SSB occasion of the cell with less energy consumption compared to the SSB transmission.

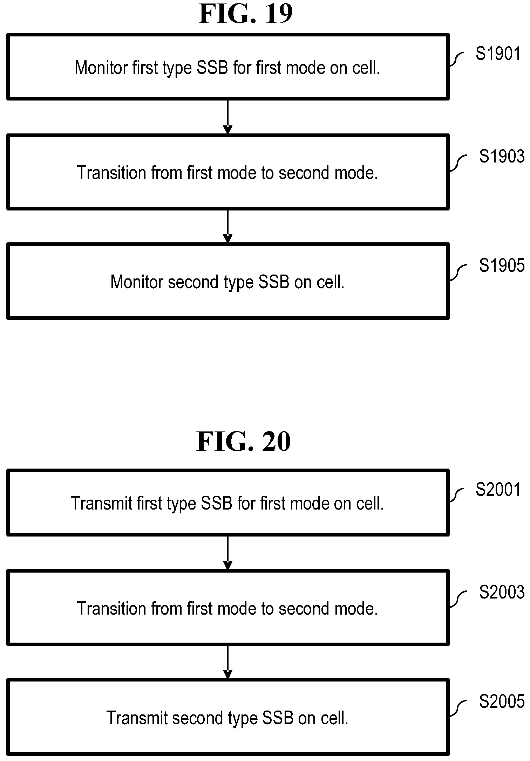

FIG. 19 illustrates a flow of DL signal reception at the UE according to some implementations of the present disclosure, and FIG. 20 illustrates a flow of DL signal transmission at the BS according to some implementations of the present disclosure.

In FIGS. 19 and 20, a first type of SSB is an SSB according to the current NR standard (refer to FIG. 16), and a second type of SSB is an ES-DRS configured according to one of the methods/implementations described in Method #1. The first type of SSB, as mentioned earlier, may be transmitted periodically (e.g., with a periodicity of 20 ms), while the second type of SSB may be transmitted with the same periodicity as the first type of SSB or with a periodicity longer than the periodicity of the first type of SSB. In FIGS. 19 and 20, a second mode is an NES mode, and a first mode is a general mode, which is not the NES mode, i.e., a non-NES mode.

The UE may perform operations according to some implementations of the present disclosure in association with DL signal receptions. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

Referring to FIG. 19, a method performed by the UE or the operations of the UE, processing device, computer-readable (non-transitory) storage medium, and/or computer program product may include: monitoring a first type SSB for a first mode on a cell (S1901); based on detecting the first type SSB, acquiring time and frequency synchronization with the cell from the first type SSB; based on transitioning from the first mode to a second mode (S1903), monitoring the second type SSB on the cell (S1905); and based on detecting the second type SSB, acquiring time and frequency synchronization with the cell from the second type SSB. The first type SSB may include a PSS in a first OFDM symbol, an SSS in a third OFDM symbol, and a PBCH in second to fourth OFDM symbols among four consecutive OFDM symbols for the first type SSB while leaving a portion for the SSS in the third OFDM symbol. The second type SSB has a structure different from the first type SSB. For example, the second type SSB may be the ES-DRS described in Method #1.

The BS may perform operations according to some implementations of the present disclosure in association with DL signal transmissions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

Referring to FIG. 20, a method performed by the BS or the operations of the BS, processing device, computer-readable (non-transitory) storage medium, and/or computer program product may include: transmitting a first type SSB for a first mode on a cell (S2001); and based on transitioning from the first mode to a second mode (S2003), transmitting a second type SSB on the cell (S2005). The first type SSB may include a PSS in a first OFDM symbol, an SSS in a third OFDM symbol, and a PBCH in second to fourth OFDM symbols among four consecutive OFDM symbols for the first type SSB while leaving a portion for the SSS in the third OFDM symbol. The second type SSB has a structure different from the first type SSB. For example, the second type SSB may be the ES-DRS described in Method #1.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method of receiving a downlink signal by a user equipment (UE) in a wireless communication system, the method comprising:
monitoring a first type synchronization signal block (SSB) for a first mode on a cell;
based on detecting the first type SSB, acquiring time and frequency synchronization with the cell via the first type SSB;
based on transitioning from the first mode to a second mode, monitoring a second type SSB on the cell; and
based on detecting the second type SSB, acquiring time and frequency synchronization with the cell via the second type SSB,
wherein the first type SSB comprises a primary synchronization signal (PSS) in a first orthogonal frequency division multiplexing (OFDM) symbol, a secondary synchronization signal (SSS) in a third OFDM symbol, and a physical broadcast channel (PBCH) in second to fourth OFDM symbols among four consecutive OFDM symbols for the first type SSB while leaving a portion for the SSS in the third OFDM symbol, and
wherein the second type SSB has a structure different from the first type SSB.

2. The method of claim 1, wherein the second type SSB comprises the PSS in a first OFDM symbol, the SSS in a third OFDM symbol, and a tracking reference signal (TRS) in second and fourth OFDM symbols among four consecutive OFDM symbols for the second type SSB.

3. The method of claim 1, wherein the second type SSB occupies fewer resource blocks than resource blocks occupied by the PSS and SSS of the first type SSB.

4. The method of claim 1, wherein the second type SSB consists of a cyclic prefix (CP), at least one random access preamble, and a guard period (GP).

5. The method of claim 1, wherein the second type SSB comprises:
i) the PSS in first and second OFDM symbols, and the SSS in third and fourth OFDM symbols among four consecutive OFDM symbols for the second type SSB; or
ii) the PSS in the first and fourth OFDM symbols, and the SSS in the second and third OFDM symbols among the four consecutive OFDM symbols for the second type SSB.

6. The method of claim 5, wherein the second type SSB applies a subcarrier spacing that is twice a subcarrier spacing for a physical downlink shared channel on the cell to the SSS.

7. The method of claim 1, wherein the second mode is a network energy saving mode.

8. A user equipment (UE) configured to receive a downlink signal in a wireless communication system, the UE comprising:
at least one transceiver;
at least one processor; and
at least one computer memory operably connected to the at least one processor and storing instructions that, when executed, cause the at least one processor to perform operations comprising:
monitoring a first type synchronization signal block (SSB) for a first mode on a cell;
based on detecting the first type SSB, acquiring time and frequency synchronization with the cell from the first type SSB;
based on transitioning from the first mode to a second mode, monitoring a second type SSB on the cell; and
based on detecting the second type SSB, acquiring time and frequency synchronization with the cell from the second type SSB,
wherein the first type SSB comprises a primary synchronization signal (PSS) in a first orthogonal frequency division multiplexing (OFDM) symbol, a secondary synchronization signal (SSS) in a third OFDM symbol, and a physical broadcast channel (PBCH) in second to fourth OFDM symbols among four consecutive OFDM symbols for the first type SSB while leaving a portion for the SSS in the third OFDM symbol, and
wherein the second type SSB has a structure different from the first type SSB.

9. A processing device in a wireless communication system, the processing device comprising:
at least one processor; and
at least one computer memory operably connected to the at least one processor and storing instructions that, when executed, cause the at least one processor to perform operations comprising:
monitoring a first type synchronization signal block (SSB) for a first mode on a cell;
based on detecting the first type SSB, acquiring time and frequency synchronization with the cell from the first type SSB;
based on transitioning from the first mode to a second mode, monitoring a second type SSB on the cell; and
based on detecting the second type SSB, acquiring time and frequency synchronization with the cell from the second type SSB,
wherein the first type SSB comprises a primary synchronization signal (PSS) in a first orthogonal frequency division multiplexing (OFDM) symbol, a secondary synchronization signal (SSS) in a third OFDM symbol, and a physical broadcast channel (PBCH) in second to fourth OFDM symbols among four consecutive OFDM symbols for the first type SSB while leaving a portion for the SSS in the third OFDM symbol, and
wherein the second type SSB has a structure different from the first type SSB.

10. A computer-readable storage medium configured to store at least one program code comprising instructions that, when executed, cause at least one processor to perform operations comprising:
monitoring a first type synchronization signal block (SSB) for a first mode on a cell;
based on detecting the first type SSB, acquiring time and frequency synchronization with the cell from the first type SSB;
based on transitioning from the first mode to a second mode, monitoring a second type SSB on the cell; and
based on detecting the second type SSB, acquiring time and frequency synchronization with the cell from the second type SSB,
wherein the first type SSB comprises a primary synchronization signal (PSS) in a first orthogonal frequency division multiplexing (OFDM) symbol, a secondary synchronization signal (SSS) in a third OFDM symbol, and a physical broadcast channel (PBCH) in second to fourth OFDM symbols among four consecutive OFDM symbols for the first type SSB while leaving a portion for the SSS in the third OFDM symbol, and
wherein the second type SSB has a structure different from the first type SSB.

11. A method of transmitting, by a base station (BS), a downlink signal to a user equipment (UE) in a wireless communication system, the method comprising:
transmitting a first type synchronization signal block (SSB) on a cell; and
based on transitioning from the first mode to a second mode, transmitting a second type SSB on the cell,
wherein the first type SSB comprises a primary synchronization signal (PSS) in a first orthogonal frequency division multiplexing (OFDM) symbol, a secondary synchronization signal (SSS) in a third OFDM symbol, and a physical broadcast channel (PBCH) in second to fourth OFDM symbols among four consecutive OFDM symbols for the first type SSB while leaving a portion for the SSS in the third OFDM symbol, and
wherein the second type SSB has a structure different from the first type SSB.

12. A base station (BS) configured to transmit a downlink signal to a user equipment (UE) in a wireless communication system, the BS comprising:
at least one transceiver;
at least one processor; and
at least one computer memory operably connected to the at least one processor and storing instructions that, when executed, cause the at least one processor to perform operations comprising:
transmitting a first type synchronization signal block (SSB) on a cell; and
based on transitioning from the first mode to a second mode, transmitting a second type SSB on the cell,
wherein the first type SSB comprises a primary synchronization signal (PSS) in a first orthogonal frequency division multiplexing (OFDM) symbol, a secondary synchronization signal (SSS) in a third OFDM symbol, and a physical broadcast channel (PBCH) in second to fourth OFDM symbols among four consecutive OFDM symbols for the first type SSB while leaving a portion for the SSS in the third OFDM symbol, and
wherein the second type SSB has a structure different from the first type SSB.

13. The BS of claim 12, wherein the second type SSB comprises the PSS in a first OFDM symbol, the SSS in a third OFDM symbol, and a tracking reference signal (TRS) in second and fourth OFDM symbols among four consecutive OFDM symbols for the second type SSB.

14. The BS of claim 12, wherein the second type SSB occupies fewer resource blocks than resource blocks occupied by the PSS and SSS of the first type SSB.

15. The BS of claim 12, wherein the second type SSB consists of a cyclic prefix (CP), at least one random access preamble, and a guard period (GP).

16. The BS of claim 12, wherein the second type SSB comprises:
i) the PSS in first and second OFDM symbols, and the SSS in third and fourth OFDM symbols among four consecutive OFDM symbols for the second type SSB; or
ii) the PSS in the first and fourth OFDM symbols, and the SSS in the second and third OFDM symbols among the four consecutive OFDM symbols for the second type SSB.

17. The BS of claim 16, wherein the second type SSB applies a subcarrier spacing that is twice a subcarrier spacing for a physical downlink shared channel on the cell to the SSS.

18. The BS of claim 12, wherein the second mode is a network energy saving mode.
